# EUROPÄISCHE PATENTSCHRIFT

(11) **EP 1 207 007 B1**
(45) Veröffentlichungstag und Bekanntmachung des Hinweises auf die Patenterteilung: **11.01.2006**
(21) Anmeldenummer: 01126285.4
(22) Anmeldetag: 06.11.2001
(51) Int. Cl.: B23Q 1/62, B29C 65/08

(54) **Vorrichtung zur Ultraschallbearbeitung von Werkstücken**
Device for the ultrasonic machining of workpieces
Dispositif pour l'usinage de pièces par ultrason

(30) Priorität: 08.11.2000 DE 20019000 U
(43) Veröffentlichungstag der Anmeldung: 22.05.2002
(73) Patentinhaber: Maschinenfabrik Spaichingen GmbH, 78549 Spaichingen (DE)
(72) Erfinder: Distel, Armin, 78647 Trossingen (DE)
(74) Vertreter: Freiherr von Schorlemer, Reinfried

(56) Entgegenhaltungen:
- DE-B- 1 479 356
- US-A- 3 780 926
- US-A- 5 976 314
- PATENT ABSTRACTS OF JAPAN vol. 1997, no. 09, 30. September 1997 (1997-09-30) -& JP 09 137374 A (WACOAL CORP), 27. Mai 1997 (1997-05-27)

## Beschreibung

Die Erfindung betrifft eine Vorrichtung der im Oberbegriff des Anspruchs 1 angegebenen Gattung.

Bekannte Vorrichtungen dieser Art (z. B. DE 42 06 584 C2) werden insbesondere zur Verbindung von zwei Werkstücken durch Punkt-, Niet-, Zapfen- oder Flächenschweißen benutzt, wobei wenigstens eines der beiden Werkstücke aus einem thermoplastischen Material besteht. Die Werkstücke werden dabei lokal so stark erwärmt, daß sie miteinander verschmelzen. Die Erwärmung der Werkstücke wird dadurch bewirkt, daß eine zu mechanischen Schwingungen angeregte Sonotrode mittels einer Vorschubeinheit gegen wenigstens eines der Werkstücke gedrückt wird, wobei die Sonotrode Bestandteil eines an der Vorschubeinheit montierten Schwinggebildes ist, das die Sonotrode, einen Konverter und ggf. noch ein zwischen beide geschaltetes Amplitudentransformationsstück enthält. Bei der Bearbeitung nur eines Werkstückes können die Schwingungen auch dazu benutzt werden, das Werkstück zu verformen oder zu schneiden. Da die Sonotroden in der Regel mit Ultraschallfrequenzen von z. B. 20 kHz oder 35 kHz schwingen, werden derartige Bearbeitungsvorgänge allgemein als Ultraschallbearbeitungen bezeichnet. Das Haupteinsatzgebiet der beschriebenen Vorrichtungen liegt in der Bearbeitung von Kunststoffteilen, die für Gehäuse von Elektrogeräten und in besonderem Maß in der Automobilindustrie sowohl für Karosserieteile wie Stoßstangen als auch für Innenraumverkleidungen wie Türverkleidungen und Konsolen verwendet werden. Die mit dem Werkstück in Verbindung stehenden Sonotroden sind je nach Art und Material der zu bearbeitenden Werkstücke unterschiedlich gestaltet.

Schweißungen der beschriebenen Art werden z. B. dadurch ausgeführt, daß die Sonotrode auf vorgewählte Punkte oder auf einen sogenannten Schweiß- oder Nietdom des Werkstücks gedrückt wird, der an einem ersten, auf einem Amboß aufliegenden Werkstück ausgebildet ist, durch ein entsprechendes Loch eines zweiten, mit diesem zu verbindenden Werkstücks ragt und z. B. 10 mm hoch und ggf. hohlzylindrisch ausgebildet ist. Maßgeblich für die Qualität einer auf diese oder andere Weise durchgeführten Schweißung oder sonstigen Bearbeitung ist dabei unter anderem die Präzision, mit der die Sonotrode auf die jeweilige Bearbeitungsstelle aufgesetzt wird. Handelt es sich um Werkstücke mit nur einer Bearbeitungsstelle, ist es vergleichsweise einfach, die Sonotrode in die richtige Position zu bringen. Problematisch ist dies aber immer dann, wenn es sich um Werkstücke der oben bezeichneten Art handelt, die eine Vielzahl von gleichzeitig zu bearbeitenden Bearbeitungsstellen aufweisen.

In derartigen Fällen ist es üblich, alle benötigten Sonotroden bzw. deren Vorschubeinheiten an einem gemeinsamen, als Konverterplatte bezeichneten Bauteil zu montieren, das an einer oberhalb des zu bearbeitenden Werkstücks befindlichen Stelle der Schweißmaschine od. dgl. stationär angeordnet wird. Die Positionierung der Vorschubeinheiten an dieser Konverterplatte erfolgt dabei im Werk des Maschinenherstellers anhand von Daten, die vom Benutzer der Maschine geliefert werden. Der Maschinenhersteller versieht dazu die Konverterplatte mit aus den erhaltenen Daten berechneten Bohrungen, die zur Aufnahme von die Vorschubeinheiten durchragenden Befestigungsschrauben dienen, und baut die fertig gebohrte Konverterplatte dann in die Maschine oder ggf. einen Werkzeugwechselsatz ein. Wird nach Montage der Schwinggebilde festgestellt, daß nicht alle der zahlreichen Sonotroden die für sie vorgesehenen Bearbeitungspositionen erreichen, sind aufwendige Nachbearbeitungen erforderlich, da die betreffenden Vorschubeinheiten einschließlich der an ihnen befestigten Schwinggebilde demontiert, die Konverterplatte unter Einsatz von Handbohrmaschinen mit neuen Bohrungen versehen und die Vorschubeinheiten dann erneut an den Konverterplatten befestigt werden müssen.

Daneben ist es bereits bekannt (DE 297 13 448 U1), ausgewählte Vorschubeinheiten mit einem Montagekörper zu versehen, an dem mehrere Schwinggebilde gemeinsam befestigt sind, und dabei Mittel in Form von Langlöchern und diese durchragenden Befestigungsschrauben zur Einstellung der Positionen der Schwinggebilde am Montagekörper vorzusehen. Derartige Einstelleinrichtungen dienen allerdings nur der einstellbaren Befestigung der Sonotroden an den Montagekörpem und können allenfalls zur relativen Einstellung der Lagen der Sonotroden am gemeinsamen Montagekörper dienen. Ist der Montagekörper selbst jedoch falsch an der Konverterplatte montiert, muß erst einmal die Lage des Montagekörpers an der Konverterplatte korrigiert werden, bevor damit begonnen werden kann, eine Feineinstellung der relativen Positionen der Sonotroden vorzunehmen. Auch bei ebenfalls bereits bekannten Konstruktionen, die Mittel zur Veränderung der Positionen der Sonotroden innerhalb der Schwinggebilde aufweisen, sind Änderungen der Befestigungspunkte der Vorschubeinheiten an den Konverterplatten häufig unvermeidbar. Durch derartige Einstelleinrichtungen werden daher die Schwierigkeiten bei der genauen Positionierung der Vorschubeinheiten an der Konverterplatte nicht beiseitigt.

Ausgehend davon liegt der Erfindung das technische Problem zugrunde, die Vorrichtung der eingangs bezeichneten Gattung so auszubilden, daß eine ungenaue Positionierung der Vorschubeinheiten bei der ersten Montage nicht kritisch ist und etwaige Lageungenauigkeiten der Sonotroden mit vergleichsweise einfachen Mitteln auch noch nachträglich beseitigt werden können.

Zur Lösung dieses Problems dienen die kennzeichneten Merkmale des Anspruchs 1.

Die Erfindung bringt den Vorteil mit sich, daß die als Rasterplatte ausgebildete Konverterplatte bereits vom Werk aus eine Vielzahl von Öffnungen aufweist, die der Montage der Vorschubeinheiten dienen können. Wird daher eine Vorschubeinheit aufgrund fehlerhafter Daten oder aufgrund irgendeines Fehlers im Werk des Schweißmaschinenherstellers od. dgl. falsch positioniert, kann zunächst mit Hilfe vorhandener Einstelleinrichtungen versucht werden, den Fehler zu korrigieren. Gelingt dies nicht, braucht die Vorschubeinheit nur mit Hilfe einer anderen Öffnung an der Konverterplatte befestigt werden, ohne daß neue Berechnungen, Bohrungen od. dgl. vorgenommen werden müssen.

Weitere vorteilhafte Merkmale der Erfindung ergeben sich aus den Unteransprüchen.

Die Erfindung wird nachfolgend in Verbindung mit den beiliegenden Zeichnungen an Ausführungsbeispielen näher erläutert. Es zeigen:
Fig. 1 in einer schematischen Vorderansicht den allgemeinen Aufbau einer erfindungsgemäßen Vorrichtung zur Ultraschallbearbeitung von Werkstücken; und
Fig. 2 die Bearbeitungsvorrichtung in einer schematischen, perspektivischen und gegenüber Fig. 1 vergrößerten Ansicht mit Einzelheiten einer erfindungsgemäßen Konverterplatte und zwei dieser zugeordneten Einstelleinrichtungen.

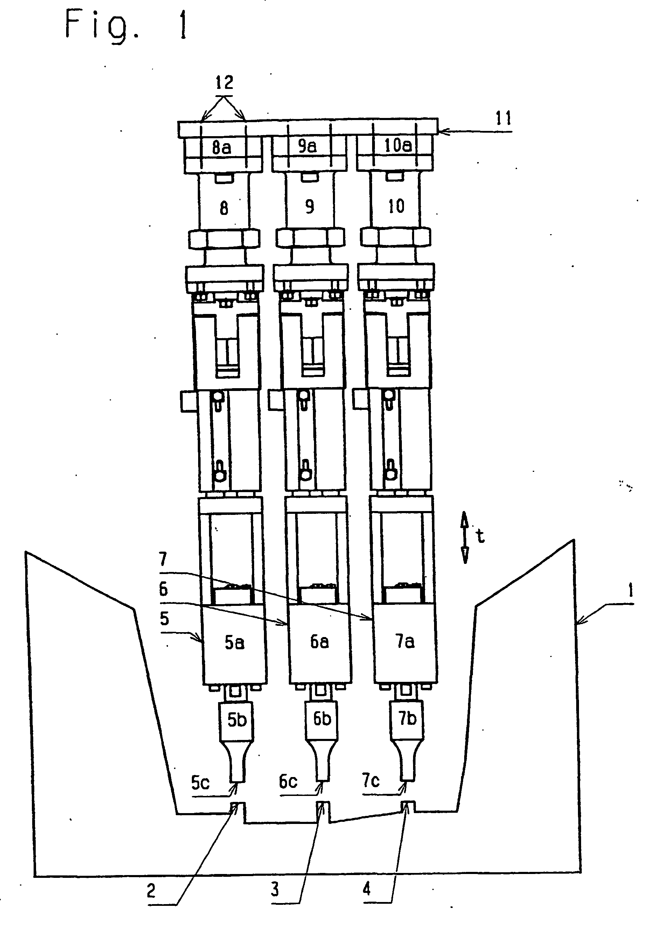

Fig. 1 zeigt in einer grob schematischen Darstellung den allgemeinen Aufbau einer erfindungsgemäßen Vorrichtung. Danach enthält ein Werkstück 1 an seiner Oberfläche eine Mehrzahl von Bearbeitungstellen 2, 3 und 4 in Form von Schweiß- bzw. Nietdomen od. dgl., die in unterschiedlichen Höhenniveaus enden. Für ein derartiges Werkstück werden z. B. drei verschiedene, einzeln abgestimmte Schwinggebilde 5, 6 und 7 und mit diesen gekoppelte Vorschubeinheiten 8, 9 und 10 vorgesehen. Jedes Schwinggebilde 5 bis 7 besteht in an sich bekannter Weise aus je einem in der Regel als piezoelektrischer Schwingungserzeuger ausgebildeten Konverter 5a, 6a bzw. 7a und einer mit diesem verbundenen Sonotrode 5b, 6b bzw. 7b, deren Unterseiten den Bearbeitungstellen 2 bis 4 zugeordnete Bearbeitungsflächen 5c, 6c bzw. 7c aufweisen. Zwischen die Konverter 5a bis 7a und die Sonotroden 5b bis 7b könnte jeweils noch ein Amplitudentransformationsstück geschaltet sein.

Die Vorschubeinheiten 8, 9 und 10 sind üblicherweise in einer von der Lage der hier domartigen Bearbeitungstellen 2 bis 4 abhängigen Anordnung an einem stationären, nachfolgend als Konverterplatte 11 bezeichneten Bauteil einer nicht näher dargestellten Ultraschall-Bearbeitungsmaschine befestigt. Das bedeutet, daß die Bearbeitungsflächen 5c, 6c und 7c nicht nur mit einem dem Höhenversatz der Oberflächen der Bearbeitungsstellen 2 bis 4 entsprechenden Höhenvorsatz angeordnet sind, sondern auch vor allem seitlich dazu dieselben Abstände wie diese voneinander aufweisen und konzentrisch auf diese ausgerichtet sein müsen. Werden die Schwinggebilde 5, 6 und 7 daher beim Betrieb mittels der Vorschubeinheiten 8, 9 und 10 in Richtung eines Doppelpfeils t parallel zu den Achsen der Bearbeitungstellen bzw. Dome 2 bis 4 bzw. parallel zu den Längsachsen der Sonotroden 5b, 6b und 7b in Richtung des Werkstücks 1 bewegt, dann treffen alle Bearbeitungsflächen 5c bis 7c im wesentlichen gleichzeitig und senkrecht von oben auf eine zugeordnete Bearbeitungsstelle 2 bis 4 auf, wodurch ein gleichförmiges Bearbeitungsergebnis erzielt und ein seitliches Wegdrücken der Bearbeitungstellen 2 bis 4 verhindert wird.

Zur Befestigung und Positionierung der Sonotroden 5b, 6b und 7b in der Vorrichtung werden die Vorschubeinheiten 8, 9 und 10 an ihren freien Enden normalerweise mit Montageflanschen 8a, 9a und 10a versehen, die mit in Fig. 1 nur schematisch angedeuteten Befestigungsschrauben 12 und ggf. mit nicht dargestellten Muttern an der Konverterplatte 11 befestigt werden. Zu diesem Zweck wird die Konverterplatte 11 normalerweise überall dort, wo eine Vorschubeinheit 8, 9 bzw. 10 befestigt werden soll, mit durch Bohren hergestellten, durchgehenden Öffnungen versehen, in die die Befestigungsschrauben 12 eingeführt werden. Ergibt sich dann, daß die Bohrungen ungenau positioniert sind und die Sonotroden 5b, 6b bzw. 7b nicht die gewünschte Lage relativ zum Werkstück 1 und dessen Bearbeitungstellen 2, 3 und 4 einnehmen, müssen die Vorschubeinheiten 8, 9 und 10 demontiert, neue Bohrungen in der Konverterplatte 11 vorgesehen und anschließend die Vorschubeinheiten 8, 9 und 10 wieder angeschraubt werden.

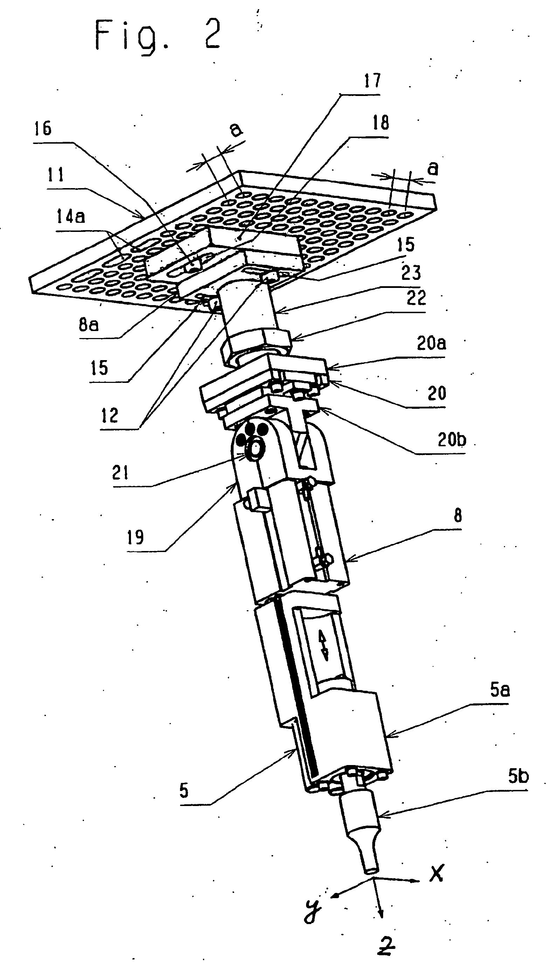

Erfindungsgemäß wird dagegen, wie nur Fig. 2 zeigt, die Konverterplatte 11 mit einer Vielzahl von nach Art eines Rasters angeordneten, durchgehenden Öffnungen 14 versehen. Dadurch ist es möglich, bei der Montage der Vorschubeinheiten 8, 9 bzw. 10, wie in Fig. 2 am Beispiel der Vorschubeinheit 8 dargestellt ist, jeweils diejenigen Öffnungen 14 zur Aufnahme der Befestigungsschrauben 12 auszuwählen, die am besten zur Erreichung der gewünschten Bearbeitungsposition der zugehörigen Sonotrode 5b geeignet ist. Dadurch ist es möglich, ohne umständliche Berechnungen für die Lagen der Schraublöcher stets eine Öffnung 14 aufzufinden, die der gewünschten Lage sehr nahe kommt. Dabei ist der Fehler um so kleiner, je feiner das gewählte Raster ist, d. h. je mehr Öffnungen 14 z. B. in zueinander senkrechten Reihen und Spalten der Konverterplatte 11 angeordnet sind.

Soll die Vorschubeinheit 8 mittels einer einzigen Befestigungsschraube 12 an der Konverterplatte 11 befestigt werden, braucht der Montageflansch 8a nur einen Durchgang für eine Befestigungsschraube 12 aufweisen. Sind dagegen wenigstens jeweils zwei Befestigungsschrauben erwünscht, z. B. um die Vorschubeinheit 8 undrehbar an der Konverterplatte 11 zu montieren, wird der Montageflansch 8a mit wenigstens zwei Durchgängen versehen, die z. B. in Abständen voneinander angeordnet sind, die einem ganzzahligen Vielfachen eines in Fig. 2 angedeuteten, dem Abstand der Öffnungen 14 in Reihen- und Spaltenrichtung entsprechenden Rastermaß bzw. -abstand a entsprechen.

Auch bei sehr kleinen Rastermaßen a ist es möglich, daß die Sonotrode 5b nicht ausreichend genau positionierbar ist. Aus diesem Grund ist erfindungsgemäß eine zusätzliche Einstelleinrichtung vorgesehen, die nachfolgend anhand der Fig. 2 und der darin gezeigten Vorschubeinheit 8 bzw. dem zugehörigen Schwinggebilde erläutert wird.

Wie Fig. 2 zeigt, wird die Sonotrode 5b mit Hilfe der Vorschubeinheit 8 in Richtung ihrer Längsachse vor- und zurückgewegt, die hier mit der Z-Achse eines gedachten kartesischen Koordinatensystems zusammenfällt. Die Konverterplatte 11 ist im wesentlichen senkrecht zu dieser Z-Achse angeordnet, wobei die Öffnungen 14 z. B. in parallel zur X-Achse verlaufenden Reihen und parallel zur Y-Achse angeordneten Spalten des gedachten Koordinatensystems angeordnet sind.

Nach einem ersten Ausführungsbeispiel der Erfindung kann die Einstelleinrichtung für die Sonotrode 5b sowohl erste Langlöcher 14a in der Konverterplatte 11 als auch zweite Langlöcher 15 im Montageflansch 8a aufweisen bzw. durch diese gebildet sein. Dabei bestehen z. B. alle Öffnungen 14 der Konverterplatte 11 aus derartigen ersten Langlöchern 14a, und die langen Achsen dieser Langlöcher 14a sind z. B. parallel zur Y-Achse angeordnet, wie Fig. 2 für einige der Öffnungen 14a beispielhaft zeigt. Dagegen sind die zweiten Langlöcher 15 des Montageflansches 8a so angeordnet, daß ihre langen Seiten im montierten Zustand parallel zur X-Achse liegen. Daher ist es möglich, den Montageflansch 8a im leicht gelösten Zustand der Befestigungsschrauben 12 in X- und Y-Richtung relativ zur Konverterplatte 11 zu verschieben, um dadurch die Lage der Sonotrode 5b in den Grenzen, die die Langlöcher 14a und 15 zulassen, zu verändern. Anschließend werden die Befestigungsschrauben 12 bzw. in Fig. 2 nicht dargestellte, auf der anderen Seite der Konverterplatte 11 angeordnete Muttern festgezogen und durch die eingestellte Positionierung der Sonotrode 5b gesichert ist.

Die Vorschubeinheiten 9, 10 und Sonotroden 6b, 7b werden zweckmäßig auf dieselbe Weise an der Konverterplatte 11 positioniert und befestigt.

Ein wesentlicher Vorteil der Erfindung besteht darin, daß unabhängig von den im Einzelfall zu bearbeitenden Werkstück 1 (Fig. 1) stets eine gerasterte Konverterplatte 11 verwendet werden kann, die bereits mit den Öffnungen 14 bzw. 14a versehen ist. Umständliches Bohren kann daher entfallen. Dennoch ist eine genaue Positionierung der Sonotrode 5b möglich, indem zunächst eine der ungefähren Sonotrodenposition entsprechende Öffnung 14, 14a ausgewählt und dann mit Hilfe der Langlöcher 14a, 15 eine Feineinstellung vorgenommen wird. Dies kann sowohl beim Hersteller als auch beim Benutzer der Bearbeitungsmaschine gemacht werden. Außerdem werden die Konstruktionszeit für die Konverterplatte 11 und die Montage der mit dieser zu verbindenden Sonotroden 5b, 6b und 7b insbesondere bei schwierigen Schweißaufgaben stark reduziert. Weiterhin ist Ausschuß durch falsch gebohrte Konverterplatten 11 praktisch ausgeschlossen. Schließlich wird eine hohe Flexibilität des Gesamtsystems erreicht. Das ermöglicht es sogar, dieselbe Konverterplatte 11 einschließlich der daran montierten Sonotroden für geringfügig unterschiedliche Bearbeitungsaufgaben zu verwenden, wie sie sich insbesondere bei der Bearbeitung von gleichartigen, jedoch in der Größe unterschiedlichen Kraftfahrzeugteilen in Kleinserien ergeben können.

Alternativ zu Fig. 2 ist es möglich, die Richtung der langen Achsen der ersten und zweiten Langlöcher 14a, 15 zu vertauschen und die einen parallel zur X-Achse und die anderen im montierten Zustand parallel zur Y-Achse anzuordnen.

Bei einer zweiten Ausführungsform der Erfindung, die sich ebenfalls aus Fig. 2 ergibt, sind die Öffnungen 14 als kreisrunde Löcher ausgebildet, die nur mit geringem Spiel von den zugehörigen Befestigungsschrauben 16 durchragt werden. Um dennoch eine Einstellung der Sonotrode 5b in zwei zueiander senkrechten Richtungen zu ermöglichen, ist zusätzlich eine zwischen dem Montageflansch 8a und der Konverterplatte 11 anzuordnende Zwischenplatte 17 vorgesehen, die wenigstens einen Durchgang in Form eines zweiten Langlochs 18 aufweist. Daher wird die Zwischenplatte 17 mittels der die zweiten Langlöcher 18 und die Öffnungen 14 durchragenden Befestigungsschrauben 16 an der Konverterplatte 11 befestigt, was eine Einstellung der Zwischenplatte 18 z. B. Y-Richtung ermöglicht, wenn die langen Seiten der Durchgänge 18 parallel zur Y-Richtung angeordnet werden. Die Befestigungsschrauben 16 können dabei z. B. mit auf der anderen Seite der Konverterplatte 11 angeordneten und daher in Fig. 2 nicht sichtbaren Muttern zusammenwirken. Alternativ könnten die Öffnungen 14 aber auch als die Befestigungsschrauben 16 aufnehmende Gewindebohrungen ausgebildet sein. Hierdurch wird der Vorteil erzielt, daß die Zwischenplatte 17 auch dann leicht montierbar ist, wenn die Rückseite der Konverterplatte 11 nach ihrer Montage in der Maschine nicht zugänglich ist und daher das Sichern der Befestigungsschrauben 16 mit von der Rückseite her wirksamen Muttern umständlich oder unmöglich wäre.

Der Montageflansch 8a wird beim zuletzt beschriebenen Ausführungsbeispiel an der Zwischenplatte 17 befestigt, wobei die langen Seiten der ersten Langlöcher 15 zweckmäßig senkrecht zu den langen Seiten der zweiten Langlöcher 18 zu liegen kommen. Die Befestigungsschrauben 12 werden dabei z. B. in Gewindebohrungen eingedreht, die mit einem dem Abstand der ersten Langlöcher 15 entsprechenden Abstand in der Zwischenplatte 17 ausgebildet sind. Alternativ können den Befestigungsschrauben 12 aber auch Muttern zugeordnet sein, die an der in Fig. 2 nicht sichtbaren Seite der Zwischenplatte 17 und z. B. in dort ausgebildeten Aussparungen angeordnet sind. Auf diese Weise ist es möglich, den Montageflansch 8a durch Lösen der Befestigungsschrauben 12 zusammen mit der Vorschubeinheit 8 in X-Richtung relativ zur Zwischenplatte 17 und damit auch relativ zur Konverterplatte 11 einzustellen, wohingegen die Einstellung in Y-Richtung durch Lösen der Befestigungsschrauben 16 und Verschieben der Zwischenplatte 17 relativ zur Konverterplatte 11 erfolgen kann.

Die Längen der ersten und zweiten Langlöcher 15, 18 bzw. 14a legen einen vorgewählten Verstellbereich der aus ihnen gebildeten Einstelleinrichtungen fest. Dabei bietet insbesondere das die Zwischenplatte 17 aufweisende Ausführungsbeispiel den Vorteil, daß der Rasterabstand a der Öffnungen 14 in der Konverterplatte 11 so klein gewählt werden kann, daß er höchstens gleich dem maximalen Verstellbereich ist. Dadurch ist es mit Hilfe der Langlöcher 15, 18 möglich, die Sonotrode 5b innerhalb des Rastermaßes a beliebig zu verstellen, so daß nach Wahl irgendwelcher Öffnungen 14 die Befestigungsschrauben 16 nur dann in benachbarte Öffnungen 14 umgesteckt werden brauchen, wenn der Positionierungsfehler zufällig einmal größer ist, als dem Rastermaß a entspricht.

Geeignete Rastermaße a betragen z. B. 10 mm oder 20 mm. Dabei ist klar, daß die Anordnung zweckmäßig so zu treffen ist, daß jede beliebige Position am Werkstück als Bearbeitungsstelle vorgesehen werden kann.

Gemäß einer Weiterbildung der Erfindung kann die Einstelleinrichtung für die Sonotrode 5b auch ein Mittel zur Grobeinstellung und ein Mittel zur Feineinstellung aufweisen. Dabei wird das Mittel zur Grobeinstellung z. B. durch die beschriebenen Langlöcher 14a, 15 und 18 gebildet. Dagegen kann das Mittel zur Feineinstellung z. B. ein Bestandteil der Vorschubeinheit 8 sein und irgendeinen zwischen dem Montageflansch 8a und einer Schwenkvorrichtung 19 der Vorschubeinheit 8 angeordneten Verstellmechanismus 20 aufweisen. Der Schwenkmechanismus 19 gestattet z. B. eine Verschwenkung der Vorschubeinheit 8 um die Achse eines zur X-Achse parallelen Schwenkzapfens 21 innerhalb eines Verschwenkbereichs von z. B. 100°, während der Verstellmechanismus 20 z. B. den Platten 8a, 17 entsprechende Platten 20a, 20b und in diesen ausgebildete Langlöcher aufweist. Es ist dann möglich, auch noch nach der festen Montage der Vorschubeinheit 8 in der Konverterplatte 11 eine begrenzte Feineinstellung der Sonotrode 5b in X- und Y-Richtung vorzunehmen und/oder die Schwenklage der gesamten Vorschubeinheit 8 relativ zur Konverterplatte 11 zu verändern.

Eine weitere Veränderung der Sonotrodenposition ist schließlich dadurch möglich, daß die Teile 8a und 8 (oder 8a und 20) durch eine in Z-Richtung wirkende Schraubverbindung verbunden werden, der z. B. eine Kontermutter 22 zugeordnet ist. Dabei kann z. B. der Montageflansch 8a oder eine daran befestigte Hülse 23 mit einem Innengewinde und der Verstellmechanismus 20 mit einem in diese eingedrehten Gewindestift versehen sein. Diese Verstellmöglichkeit dient dem Zweck, den Abstand zwischen der Bearbeitungstelle 2 und der Bearbeitungsfläche 5c (Fig. 1) zu verändern bzw. anzupassen.

Die Sonotroden 6b und 7b können auf entsprechende Weise mit zusätzlichen Einstelleinrichtungen versehen sein.

Die Erfindung ist nicht auf die beschriebenen Ausführungsbeispiele beschränkt, die auf vielfache Weise innerhalb des Schutzsumfangs der anhängenden Ansprüche abgewandelt werden können. Dies gilt insbesondere für die Art und Ausbildung der Konverterplatte 11, deren Öffnungen 14 auch aus nicht durchgehenden, nach Art von Sacklöchern hergestellten Gewindebohrungen für Befestigungsschrauben ausgebildet sein können, die Langlöcher im Montageflansch 8a od. dgl. durchragen.

Dasselbe gilt für die Gewindebohrungen in der Zwischenplatte 17. Möglich wäre ferner, in die Öffnungen 14 Gewindebolzen einzudrehen, die senkrecht von der Konverterplatte 11 abstehen, Langlöcher in der Zwischenplatte 17 oder im Montageflansch 8a, 9a bzw. 10a durchragen und zur Befestigung dieser Teile bestimmte Muttern aufnehmen. Entsprechend könnten die Zwischenplatte 17 und/oder die Montageflansche 8a, 9a und 10a mit aus Gewindebolzen oder -bohrungen bestehenden Befestigungsmitteln versehen sein, die in der Konverterplatte 11 ausgebildete Langlöcher durchragen. Der Begriff "Befestigungsmittel" soll daher alle im Rahmen der Erfindung möglichen Öffnungen, Durchgänge, Gewindebohrungen, Gewindebolzen od. dgl. umfassen. Weiter können die Rastermaße a in Abhängigkeit von den Bedürfnissen des Einzelfalls gewählt und die Öffnungen 14 in Reihen und Spalten angeordnet sein, die von 90° abweichende Winkel einschließen. Abgesehen davon wäre es möglich, das Mittel 20 zur Feineinstellung anders als das Mittel 14, 14a, 15, 18 zur Grobeinstellung auszubilden und bei Anwendung von nur je einem Befestigungsmittel pro Vorschubeinheit 8, 9 bzw. 10 andere Mittel zur Drehsicherung vorzusehen.

## Patentansprüche

1. Vorrichtung zur Ultraschallbearbeitung von Werkstücken (1) mit einer Konverterplatte (11), wenigstens einer an dieser montierten Vorschubeinheit (8, 9, 10) für wenigstens ein mit einem Konverter (5a, 6a, 7a) und einer Sonotrode (5b, 6b, 7b) versehenes, eine Längsachse aufweisendes Schwinggebilde (5, 6, 7) und einer Einstelleinrichtung zur Einstellung des Schwinggebildes (5, 6, 7) in wenigstens zwei quer zu seiner Längsachse verlaufenden Richtungen, **dadurch gekennzeichnet, daß** die Einstelleinrichtung eine Vielzahl von nach Art eines Rasters angeordneten Befestigungsmitteln (14, 14a) aufweist, die derart an der Konverterplatte (11) vorgesehen sind, daß die Vorschubeinheit (8, 9, 10) mit Hilfe von wenigstens einem ausgewählten dieser Befestigungsmittel (14, 14a) an der Konverterplatte (11) befestigbar ist.

2. Vorrichtung nach Anspruch 1, **dadurch gekennzeichnet, daß** die Befestigungsmittel aus Öffnungen (14, 14a) bestehen.

3. Vorrichtung nach Anspruch 2, **dadurch gekennzeichnet, daß** die Vorschubeinheit (8, 9, 10) einen zur Befestigung an der Konverterplatte (11) bestimmten Montageflansch (8a, 9a, 10a) aufweist, der wenigstens einen Durchgang (15) zur Aufnahme einer einer ausgewählten Öffnung (14, 14a) zugeordneten Befestigungsschraube (12) aufweist.

4. Vorrichtung nach Anspruch 3, **dadurch gekennzeichnet, daß** der Montageflansch (8a, 9a, 10a) wenigstens zwei entsprechend dem Raster (a) beabstandete Durchgänge (15) aufweist.

5. Vorrichtung nach einem der Ansprüche 2 bis 4, **dadurch gekennzeichnet, daß** die Öffnungen (14a) aus parallelen ersten Langlöchern und die Durchgänge (15) aus parallelen zweiten Langlöchern bestehen.

6. Vorrichtung nach Anspruch 5, **dadurch gekennzeichnet, daß** die ersten und/oder zweiten Langlöcher (14a, 15) die Einstelleinrichtung bilden.

7. Vorrichtung nach der Anspruch 6, **dadurch gekennzeichnet, daß** die Einstelleinrichtung einen vorgewählten maximalen Verstellbereich aufweist und der Rasterabstand (a) der Öffnungen (14) höchstens gleich dem maximalen Verstellbereich gewählt ist.

8. Vorrichtung nach einem der Ansprüche 2 bis 4, **dadurch gekennzeichnet, daß** die Öffnungen (14) aus kreisrunden Löchern und die Durchgänge (15) aus ersten Langlöchern bestehen und daß eine zwischen der Konverterplatte (11) und dem Montageflansch (8a, 9a, 10a) anzuordende Zwischenplatte (17) vorgesehen ist, die wenigstens ein zweites Langloch (18) derart aufweist, daß die Zwischenplatte (17) mit einer das zweite Langloch (18) durchragenden und einer ausgewählten Öffnung (14) zugeordneten Befestigungsschraube (16) in einer ersten Richtung verstellbar an der Konverterplatte (11) und der Montageflansch (8a) mittels wenigstens einer ein erstes Langloch (15) durchragenden weiteren Befestigungsschraube (12) in einer zweiten Richtung verstellbar an der Zwischenplatte (17) befestigbar ist.

9. Vorrichtung nach einem der Ansprüche 1 bis 8, **dadurch gekennzeichnet, daß** die Einstelleinrichtung ein Mittel zur Grobeinstellung (14, 15, 18) und ein Mittel (20) zur Feineinstellung aufweist.

10. Vorrichtung nach Anspruch 9, **dadurch gekennzeichnet, daß** die ersten und zweiten Langlöcher (15, 18) das Mittel zur Grobeinstellung bilden.

11. Vorrichtung nach Anspruch 9 oder 10, **dadurch gekennzeichnet, daß** das Mittel zur Grobeinstellung einen vorgewählten maximalen Verstellbereich aufweist und der Rasterabstand (a) der Öffnungen (14) höchstens gleich dem maximalen Verstellbereich gewählt ist.

12. Vorrichtung nach einem der Ansprüche 1 bis 11, **dadurch gekennzeichnet, daß** die Befestigungsmittel aus Gewindebolzen und/oder Gewindebohrungen bestehen.

## Claims

1. Device for the ultrasonic machining of workpieces (1) with a converter plate (11), at least one feed unit (8, 9, 10) mounted on this for at least one oscillating structure (5, 6, 7), which is provided with a converter (5a, 6a, 7a) and a sonotrode (5b, 6b, 7b) and has a longitudinal axis, and an adjustment means for adjustment of the oscillating structure (5, 6, 7) in at least two directions running transversely to its longitudinal axis, **characterised in that** the adjustment means has a plurality of fastening means (14, 14a), which are arranged in the manner of a grid and are provided on the converter plate (11) in such a manner that the feed unit (8, 9, 10) can be fastened to the converter plate (11) by means of at least one means selected from these fastening means (14, 14a).

2. Device according to Claim 1, **characterised in that** the fastening means consist of openings (14, 14a).

3. Device according to Claim 2, **characterised in that** the feed unit (8, 9,10) has a mounting flange (8a, 9a, 10a), which is intended for fastening on the converter plate (11) and which has at least one passage (15) to receive a fastening screw (12) allocated to a selected opening (14, 14a).

4. Device according to Claim 3, **characterised in that** the mounting flange (8a, 9a, 10a) has at least two passages (15) spaced in accordance with the grid (a).

5. Device according to one of Claims 2 to 4, **characterised in that** the openings (14a) consist of parallel first elongated holes and the passages (15) consist of parallel second elongated holes.

6. Device according to Claim 5, **characterised in that** the first and/or second holes (14a, 15) form the adjustment means.

7. Device according to Claim 6, **characterised in that** the adjustment means has a preselected maximum adjustment range and the grid spacing (a) of the openings (14) is selected to be equal at most to the maximum adjustment range.

8. Device according to one of Claims 2 to 4, **characterised in that** the openings (14) consist of circular holes and the passages (15) consist of elongated holes, and that an intermediate plate (17) to be arranged between the converter plate (11) and the mounting flange (8a, 9a, 10a) is provided, which has at least a second elongated hole (18) such that the intermediate plate (17) can be fastened with a fastening screw (16), which projects through the second elongated hole (18) and is allocated to a selected opening (14), to be adjustable on the converter plate (11) in a first direction and the mounting flange (8a) can be fastened by means of at least one further fastening screw (12), which projects through a first elongated hole (15), to be adjustable on the intermediate plate (17) in a second direction.

9. Device according to one of Claims 1 to 8, **characterised in that** the adjustment means has a means for rough adjustment (14, 15, 18) and a means (20) for fine adjustment.

10. Device according to Claim 9, **characterised in that** the first and second elongated holes (15, 18) form the means for rough adjustment.

11. Device according to Claim 9 or 10, **characterised in that** the means for rough adjustment has a preselected maximum adjustment range and the grid spacing (a) of the openings (14) is selected to be equal at most to the maximum adjustment range.

12. Device according to one of Claims 1 to 11, **characterised in that** the fastening means consist of threaded bolts and/or threaded holes.

## Revendications

1. Dispositif pour l'usinage par ultrasons de pièces (1) comprenant une plaque de conversion (11), au moins une unité d'avance (8, 9, 10) montée sur celle-ci pour au moins une structure vibrante (5, 6, 7) présentant un axe longitudinal, munie d'un convertisseur (5a, 6a, 7a) et d'une sonotrode (5b, 6b, 7b), et un dispositif de réglage pour le réglage de la structure vibrante (5, 6, 7) dans au moins deux directions perpendiculaires à son axe longitudinal, **caractérisé par le fait que** le dispositif de réglage présente une pluralité de moyens de fixation (14, 14a) disposés à la manière d'une trame qui sont prévus sur la plaque de conversion (11) de telle manière que l'unité d'avance (8, 9, 10) puisse être fixée sur la plaque de conversion (11) à l'aide d'au moins un sélectionné de ces moyens de fixation (14, 14a).

2. Dispositif selon la revendication 1, **caractérisé par le fait que** les moyens de fixation sont constitués d'orifices (14, 14a).

3. Dispositif selon la revendication 2, **caractérisé par le fait que** l'unité d'avance (8, 9, 10) présente une bride de montage (8a, 9a, 10a) destinée à la fixation de la plaque de conversion (11), qui présente au moins un passage (15) pour recevoir une vis de fixation (12) associée à un orifice (14, 14a) sélectionné.

4. Dispositif selon la revendication 3, **caractérisé par le fait que** la bride de montage (8a, 9a, 10a) présente au moins deux passages (15) espacés selon la trame (a).

5. Dispositif selon l'une des revendications 2 à 4, **caractérisé par le fait que** les orifices (14a) sont constitués de premiers trous oblongs parallèles et les passages (15) de deuxièmes trous oblongs parallèles.

6. Dispositif selon la revendication 5, **caractérisé par le fait que** les premiers et/ou deuxièmes trous oblongs (14a, 15) forment le dispositif de réglage.

7. Dispositif selon la revendication 6, **caractérisé par le fait que** le dispositif de réglage présente une plage de réglage maximum présélectionnée et que l'espacement des éléments de la trame (a) des orifices (14) est au maximum égal à la plage de réglage maximum.

8. Dispositif selon l'une des revendications 2 à 4, **caractérisé par le fait que** les orifices (14) sont constitués de trous circulaires et les passages (15) de premiers trous oblongs et qu'il est prévu une plaque intermédiaire (17) à disposer entre la plaque de conversion (11) et la bride de montage (8a, 9a, 10a), qui présente au moins un deuxième trou oblong (18) de telle manière que la plaque intermédiaire (17) puisse être fixée sur la plaque de conversion (11) de manière réglable dans une première direction par une vis de fixation (16) traversant le deuxième trou oblong (18) et associée à un orifice (14) sélectionné et la bride de montage (8a) fixée sur la plaque intermédiaire (17) de manière réglable dans une deuxième direction au moyen d'au moins une autre vis de fixation (12) traversant un premier trou oblong (15).

9. Dispositif selon l'une des revendications 1 à 8, **caractérisé par le fait que** le dispositif de réglage présente un moyen de réglage grossier (14, 15, 18) et un moyen (20) de réglage précis.

10. Dispositif selon la revendication 9, **caractérisé par le fait que** les premiers et deuxièmes trous oblongs (15, 18) forment le moyen de réglage grossier.

11. Dispositif selon la revendication 9 ou 10, **caractérisé par le fait que** le moyen de réglage grossier présente une plage de réglage maximum présélectionnée et que l'espacement des éléments de la trame (a) des orifices (14) est au maximum égal à la plage de réglage maximum.

12. Dispositif selon l'une des revendications 1 à 11, **caractérisé par le fait que** les moyens de fixation sont constitués de tiges filetées et/ou de trou filetés.
